# EUROPEAN PATENT APPLICATION

(11) **EP 1 335 057 A1**
(43) Date of publication of application: **13.08.2003**
(21) Application number: 01982786.4
(22) Date of filing: 15.11.2001
(51) Int. Cl.: D04H 1/54, D06J 1/12, B32B 5/08, B32B 25/10

(54) **STRETCHING COMPOSITE SHEET AND PRODUCTION METHOD THEREFOR**

(30) Priority: 17.11.2000 JP 2000351689
(71) Applicant: Nippon Petrochemicals Company, Limited, Tokyo 100-8530 (JP); Polymer Processing Research Institute Limited, Tokyo 173-0003 (JP)
(72) Inventor: KURIHARA, Kazuhiko, Itabashi-ku, Tokyo 175-0082 (JP); YAZAWA, Hiroshi, Kunitachi-shi, Tokyo 186-0002 (JP); ISHIDA, Takashi, Narita-shi, Chiba 286-0134 (JP)
(74) Representative: Touati, Catherine
(86) International application number: JP0109969
(87) International publication number: WO02040759

(57) **Abstract**

An elastic composite sheet of the present invention has an extensible nonwoven fabric, and a thermoplastic elastomer layer bonded to one face of this extensible nonwoven fabric. The extensible nonwoven fabric is one acquired by applying extensibility giving work such as pleating work to a nonwoven fabric including non-elastic fibers, and has elongation of equal to or larger than 100% in at least one direction. The thermoplastic elastomer layer is bonded to the extensible nonwoven fabric in a pattern having a directional property in a direction in which the extensible nonwoven fabric has the elongation of equal to or larger than 100%.

## Description

### TECHNICAL FIELD

The present invention relates to an elastic composite sheet and a method of manufacturing the same, and more particularly, it relates to an elastic composite sheet obtained by subjecting an existing nonwoven fabric of low extensibility to a extensibility-giving work such as pleating work, so as to increase the extensibility of the existing nonwoven fabric and by bonding thermoplastic elastomer to the nonwoven fabric, and a method of the elastic composite sheet.

### BACKGROUND ART

Many elastic sheets used for elastic portions of a disposable diaper or various clothes are usually sheets made by bonding a nonwoven fabric with elastomer. In these sheets, since nonwoven fabrics, such as the spunbonded nonwoven fabric and the chemical-bonded nonwoven fabric, are poor in the elongation thereof, if bonded with the elastomer, these fabrics cannot show elasticity with an extended range of elongation. To solve this problem, for example, Japanese publications of unexamined application Nos. 213543/91 and 31833/94 disclose a method of manufacturing an elastic material by partially bonding elongated rubber threads with the nonwoven fabrics. Also, Japanese publication of unexamined application No. 59901/84 discloses a means for discontinuously bonding an elastomer net with a pleated nonwoven fabric.

Further, the present Applicant et al. have been disclosed an elastic composite sheet employing unidirectionally stretched nonwoven fabric in Japanese publications of unexamined application Nos. 174764/96 and 222759/99.

Nevertheless, of late years, for example, the disposable diaper has been requested to be of high quality but of high productivity at a low price, and therefore, it has become difficult for the conventional technology in which the elastomer in elongated state is partially bonded with a nonwoven fabric to cope with the request. Furthermore, since the elastomer is of bad formability, and is high priced, the use of existing elastomer products such as an elastomer net makes it difficult to acquire a low priced elastic composite sheet.

### DISCLOSURE OF THE INVENTION

It is an object of the present invention to provide an elastic composite sheet capable of being manufactured by less use of elastomer while adopting a simpler process, being of high quality and besides of high productivity at a low manufacturing cost, and a method of manufacturing the same.

In order to achieve the above-mentioned object, an elastic composite sheet according to the present invention comprises a extensible nonwoven fabric including non-elastic fibers, and subjected to a extensibility giving work to thereby have elongation of equal to or more than 100% in at least one direction and, a thermoplastic elastomer layer having a pattern with a directional property in a direction in which the extensible nonwoven fabric has the elongation of equal to or more than 100%, and bonded to the stretchable nonwoven fabric.

The thermoplastic elastomer layer having the above-described pattern can be either a plurality of strands including thermoplastic elastomer and aligned in a direction in which the extensible nonwoven fabric has the elongation of equal to or more than 100% or a web including thermoplastic elastomer. Particularly, when the thermoplastic elastomer layer is formed of the web, the web may preferably be made of a film formed with an opening elongated in a direction in which the extensible nonwoven fabric has the elongation of equal to or more than 100%, a nonwoven fabric in which fibers are aligned in a direction in which the extensible nonwoven fabric has the elongation of equal to or more than 100%, or a web having lost a restitutive force by being held at a temperature equal to or higher than a flow-starting temperature of the thermoplastic elastomer under a extended state in a direction in which the extensible nonwoven fabric has the elongation of equal to or larger than 100%. It should be understood that a web means a general sheet like material throughout the description of the present specification.

According to the elastic composite sheet of the present invention, since the thermoplastic elastomer layer is provided with the pattern having the directional property in the direction in which the extensible nonwoven fabric has elongation equal to or more than 100%, and is bonded with the extensible nonwoven fabric, regardless of a lessened amount of elastomer, the sheet can effectively exhibit its elasticity. Lessening of the mount of use of elastomer contributes to not only reducing the manufacturing cost but also ensuring lightweight of the elastic composite sheet, so that a great advantage may be brought for the disposable diaper and the clothes which are requested to be made of lightweight material. Further, the stretchable nonwoven fabric may include of commercially available mass-produced nonwoven fabrics after applying thereto extensibility giving work, and therefore it is possible to select some from the existing various nonwoven fabrics by taking into considerations the performance and the cost of such fabrics.

A method of manufacturing an elastic composite sheet according to the present invention, comprises the steps of forming a extensible nonwoven fabric having elongation of equal to or larger than 100% in at least one direction by subjecting a raw nonwoven fabric including non-elastic fibers to extensibility giving work, and bonding a layer of thermoplastic elastomer to the extensible nonwoven fabric in a pattern having a directional property in a direction in which the said stretchable nonwoven fabric has the said elongation of equal to or larger than 100%.

According to the method of manufacturing the elastic composite sheet of the present invention, the elastic composite sheet capable of effectively exhibiting elasticity with a lessened amount of elastomer can be simply manufactured.

Since the thermoplastic elastomer is inferior in its formability, forming of the layer of thermoplastic elastomer as strands made of thermoplastic elastomer is the simplest and stable method for manufacture. Further, the thermoplastic elastomer layer may be constituted by a film or a web of nonwoven fabric or the like. In such case, the web should be held in a extended state in a direction in which the extensible nonwoven fabric had elongation of equal to or more than 100%, and should preferably be maintained at a temperature equal to or higher than the flow-starting temperature of the thermoplastic elastomer until the restitutive force of the web has been lost. When the web is extended, the thickness of the web is reduced, and the feel and flexibility thereof may be increased. Furthermore, when the web is extended, the thickness thereof can be reduced, and accordingly the web before being extended might be thick. In this regard, since the thermoplastic elastomer is difficult to be manufactured in a uniformly thin web, a thick web of thermoplastic elastomer is easier to manufacture.

In the present invention, the term "longitudinal direction" that is used for explaining of the direction of elasticity of the composite sheet and the direction of stretch of a fiber means a direction in which, during either the manufacture of a nonwoven fabric or the bonding of the nonwoven fabric with the elastomer, the fabric is subjected to being machined, i.e., the fabric is fed. The term "transverse direction" means a direction perpendicular to the longitudinal direction, i.e., the direction corresponding to a widthwise direction of the nonwoven fabric.

Further, the term "non-elastic fiber" means a conventional fiber, which does not show any rubber elasticity as is shown by the elastomer.

The term "fiber" means a fiber in a broad sense, including a short fiber and a continuous filament.

The term "raw nonwoven fabric" means a nonwoven fabric that is a crude fabric material, which is formed into a extensible nonwoven fabric when it is subjected to a extensibility giving work.

Further, the term "thermoplastic elastomer" means a material that is softened by heating to be of fluidity, but shows rubber elasticity at an approximately room temperature.

### BRIEF DESCRIPTION OF THE DRAWINGS

Fig. 1 is a plan view of an elastic composite sheet required to have elasticity in a longitudinal direction, according to a first embodiment of the present invention.
Fig. 2 is a side view illustrating a schematic constitution of an example of an elastic composite sheet manufacturing apparatus suitable for manufacturing the elastic composite sheet illustrated in Fig. 1.
Fig. 3 is a plan view of the elastic composite sheet manufacturing apparatus illustrated in Fig. 2.
Fig. 4 is a schematic constitutional view illustrating another example of an apparatus for manufacturing an extensible nonwoven fabric having elongation of equal to or more than 100% in a longitudinal direction.
Fig. 5 is a schematic constitutional view illustrating a further example of an apparatus for manufacturing an extensible nonwoven fabric having elongation of equal to or more than 100% in a longitudinal direction.
Fig. 6 is a plan view of an elastic composite sheet required to have elasticity in a transverse direction, according to a second embodiment of the present invention.
Fig. 7 is a view illustrating a schematic constitution of an example of an elastic composite sheet manufacturing apparatus suitable for manufacturing the elastic composite sheet illustrated in Fig. 6.
Fig. 8 is a front view of gear rollers used in the apparatus illustrated in Fig. 7.
Fig. 9 is a schematic perspective view illustrating a further example of an apparatus for manufacturing an extensible nonwoven fabric having elongation of equal to or more than 100% in a transverse direction.
Fig. 10 is a plan view of an elastic composite sheet according to a third embodiment of the present invention.
Figs. 11a and 11b are views for explaining an example of a manufacturing method of a mesh-like film as shown in Fig. 10.
Fig. 12 is a plan view of a still further example of an elastic composite sheet required to have elongation in a longitudinal direction.

### BEST MODE FOR CARRYING OUT THE INVENTION

Now, the embodiments of the present invention will be described hereinbelow with reference to the drawings.

### (First Embodiment)

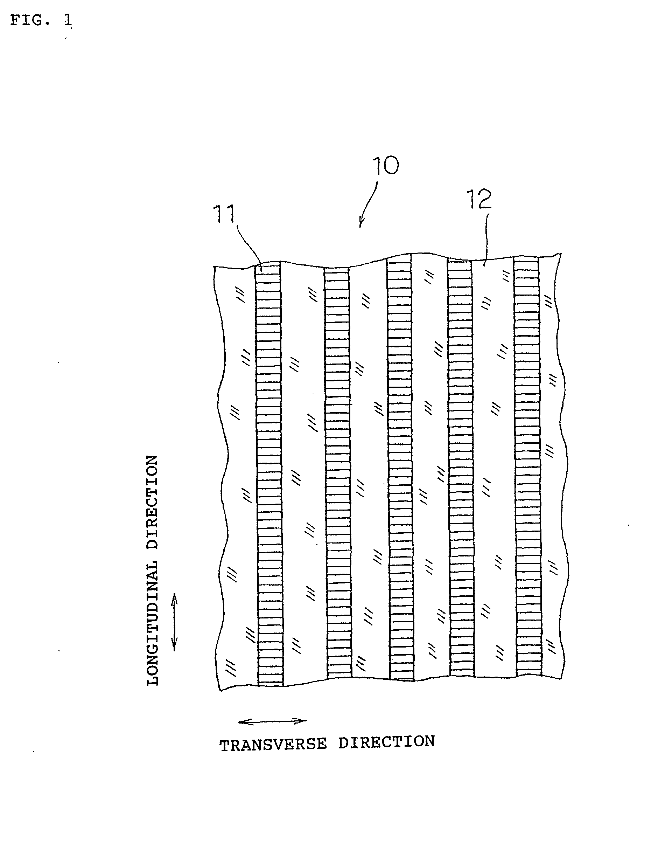

Elastic composite sheet 10 shown in Fig. 1 has a constitution that onto one face of extensible nonwoven fabric 11 having elongation of equal to or more than 100% in a longitudinal direction, a plurality of strands 12 including thermoplastic elastomer are bonded. Strands 12 are arranged to be spaced apart from one another in a transverse direction of extensible nonwoven fabric 11, and are aligned in a longitudinal direction corresponding to the stretching direction of extensible nonwoven fabric 11.

Extensible nonwoven fabric 11 is constituted by applying extensibility giving work in a longitudinal direction to a raw nonwoven fabric including non-elastic fibers, and hereby it can be elongated in a longitudinal direction at elongation of equal to or more than 100%. As the non-elastic fiber, any of fibers consisting of synthetic fiber use polymer such as conventional polypropylene, polyamide, and polyester, fibers consisting of natural fibers such as cotton and silk, and fibers consisting of semi-synthetic fiber such as rayon and acetate may be used.

Nonwoven fabric used as raw nonwoven fabric could include not only spunbonded nonwoven fabrics in a broad sense, such as commercially available spunbonded nonwoven fabric, melt blown nonwoven fabric and flash-spun nonwoven fabric, but also chemical-bonded nonwoven fabric, thermal-bonded nonwoven fabric, wet nonwoven fabric, dry nonwoven fabric, and filament nonwoven fabric such as cross laminated nonwoven fabric as disclosed in e.g., Japanese Published Examined Patent Application No. 36948/91.

Many of these raw nonwoven fabrics have already been mass-produced and on sale, and therefore they are easily available at a low price. Further, with regard to the thickness of these fabrics, there are various types fabrics from thin to thicker fabrics while having various functions, and accordingly it is possible to select some of them to be used. However, these raw nonwoven fabrics are usually either small in elongation thereof or large in its extending stress although having elongation, and therefore even if the raw nonwoven fabric is bonded with an elastic material such as an elastomer, it could not be used as an elastic composite material.

Thus, the extensibility giving work is applied to such raw nonwoven fabric to acquire extensible nonwoven fabric 11, and the acquired fabric is bonded with a thermoplastic elastomer. Hereby, a high performance elastic composite sheet 10 can be simply manufactured at a low price. Further, since strands 12 are arranged to be spaced apart from one another, air permeability that an extensible nonwoven fabric 11 per se possesses, is not damaged.

The extensibility giving work could be various physical or chemical works such as softening work, pleating work, contracting work, and fulling work which are respectively applied to the raw nonwoven fabric so as to allow the raw nonwoven fabric to have suitable loose and flexibility, whereby the raw nonwoven fabric may have elongation of equal to or more than 100%.

The softening work could include not only a softening work in a narrow sense, which is an application of softening agent to a nonwoven fabric, but also works for acquiring a flexible nonwoven fabric having a large elongation by employing a physical means, and which do not permit observable formation of pleats, for example, shrink proofing work such as the Sanforized work, and embossing work.

The pleating work includes folding work, and provides a fabric with many regular or irregular small crinkles, pleats or folds so as to give extensibility to the fabric. Examples of method of pleating in the transverse direction so as to increase elongation in a longitudinal direction could be a mechanical shrink proofing work, such as the Sanforized work (refer to U. S. Patent No. 2,324,245) and the broad stuffing box (refer to Japanese Publication of Examined Patent Application No. 41742/93), a work utilizing a manufacturing method of a creped paper in the paper manufacturing industry, and a work employing a pair of engaged rollers having multiple axial grooves to provide the fabric with pleats in a longitudinal direction. Further, it is possible to acquire a nonwoven fabric having elasticity in either longitudinal or transverse direction by suitably contriving the pattern of embossing. In any one of the above-listed works, as far as it were able to produce pleats, such work could be included in the pleating work referred to in the specification of the present application.

The contracting work should be understood as a work for physically or chemically contracting a fabric, and includes a work for intertwining fibers, which is usually referred to as the fulling work. The contracting work is also partially common with the above-mentioned softening work. A method of physically contracting a fabric in either a longitudinal or transverse direction can be, for example, the method as disclosed in Japanese publication of unexamined application No. 57620/94.

The extensible nonwoven fabric acquired by the application of the above-described extensibility giving work is provided with extensibility in one of the various directions including its longitudinal, transverse, or diagonal direction, or in a plurality of directions. The elongation of this fabric is of equal to or larger than 100% in at least one direction, preferably 150%, and most preferably 200%. Although an upper limit of the elongation of the extensible nonwoven fabric is not specifically delimited, from the viewpoint of adaptation to a practical elastic composite sheet, the extensible nonwoven fabrics having elongation of up to 1000% are usable. When the extensible nonwoven fabric has an elongation of equal to or larger than 100% in at least one direction, it was experimentally confirmed that the composite sheet including the extensible nonwoven fabric and the elastomer can show such elasticity that even after application of elongation of equal to or more than 200% to the sheet in the above-mentioned one direction, the sheet is able to repeat elastic recovery. The elongation is measured pursuant to JIS-L1085 (the Japanese Industrial Standards). Namely, a rectangular sample of 5 cm width is grasped at a spacing of 10 cm between grasping positions, and is extended at a speed of 30 cm per one minute. Then, when the sample is broken, a change in the spacing between the grasping positions is measured, and is indicated as an elongation by the rate "%" of the measured result to the amount of spacing before the extending.

On the other hand, strands 12 include thermoplastic elastomer, and the thermoplastic elastomer is supplied onto extensible nonwoven fabric 11 under a state where it is melted by heating, and is thereafter cooled to a room temperature, so that it is bonded to extensible nonwoven fabric 11.

The thermoplastic elastomer is used because the latter can be bonded to the nonwoven fabric simultaneously with the forming thereof to thereby permit a composite sheet to be manufactured by simple manufacturing steps, and as a result an inexpensive composite sheet can be acquired. As the thermoplastic elastomer, many kinds of elastomer such as polyolefins elastomer, synthetic rubbers, polyesters elastomer, polyamides elastomer, and polyurethanes elastomer may be employed. In the elastomer, the synthetic rubbers elastomer, i.e., one obtained by copolymerization of styrene and olefin, and polyurethanes elastomer can show an elasticity of large magnification and can be small in its stress upon being subjected to an elastic condition. Thus, both can be the optimum elastomer for the present invention.

Further, as described above, strands 12 are aligned in a longitudinal direction of extensible nonwoven fabric 11. Hereby, strands 12 are formed in a pattern having a directional property in a direction in which extensible nonwoven fabric 11 has elongation of equal to or larger than 100%, and as a result it can give elasticity in an aimed direction of elastic motion to elastic composite sheet 10 while reducing the amount of use of elastomer. Therefore, it is able to effectively use the thermoplastic elastomer.

As the pattern of the thermoplastic elastomer, the pattern in which the thermoplastic elastomer is formed in strands 12 is the most preferable one. By aligning strands 12 including the thermoplastic elastomer in the direction of elastic motion of elastic composite sheet 10, the minimum amount of elastomer can be most effectively used.

The thermoplastic elastomer is usually inferior in its formability, and particularly, the thermoplastic elastomer suitable for e.g., a disposable diaper in which elastic motion showing elongation of equal to or more than 200% is repeated, is inferior in its formability. Therefore, forming of the thermoplastic elastomer in strands, which are the simplest form, is suitable for stably manufacturing a high quality composite sheet at a low price. The "strand" includes, in addition to a relatively fine endless or quasi-endless form usually referred to as a filament, a relatively thick endless or quasi-endless form. Usually, the filament is of at most around several hundreds tex, but the filament of several thousands tex is included in the specification of the present Application.

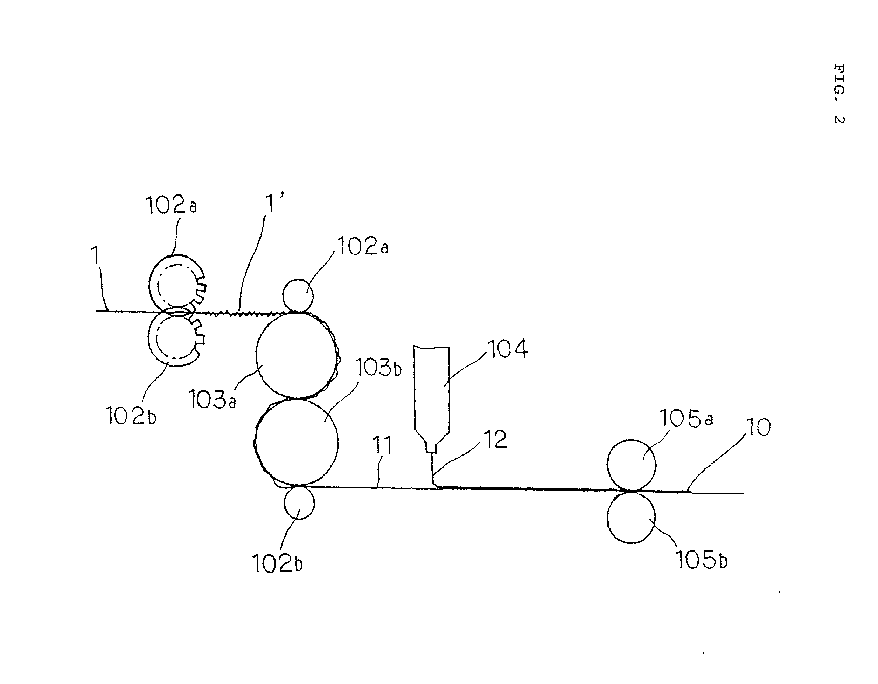

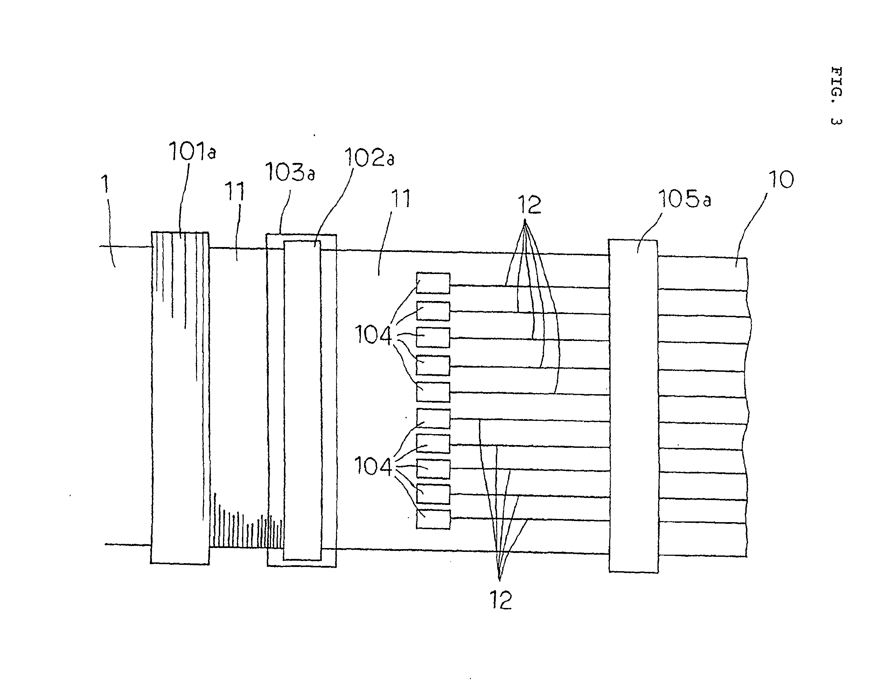

Next, an embodiment of a manufacturing method of elastic composite sheet 10 as shown in Fig. 1 will be described with reference to Figs. 2 and 3.

In Figs. 2 and 3, raw nonwoven fabric 1 initially passes through between a pair of gear rollers 101a and 101b. Gear rollers 101a and 101b are respectively provided with many convexo-concaves, which are alternately arranged around the entire circumferential surface of respective gear rollers 101a and 101b and are formed so as to extend over the entire region in a direction parallel with the rotating axis of respective gear rollers 101a and 101b, and the convexo-concaves of respective gear rollers 101a and 101b are arranged to engage with one another. In Fig. 2, for brevity sake, only a part of the convexo-concaves of gear rollers 101a and 101b are illustrated. Due to passing of raw nonwoven fabric through between gear rollers 101a and 101b, convexo-concaves are formed in raw nonwoven fabric 1, which are copied from the convexo-concaves of gear rollers 101a and 101b, to generate convexo-concaved nonwoven fabric 1'. In the present embodiment, the pitch and the height of the convexo-concaves of gear rollers 101a and 101b are designed so that the cycle of appearance of the convexo-concaves of the acquired convexo-concaved nonwoven fabric 1' is approximately 1mm, and the depth of the same convexo-concaves is approximately 1mm.

Subsequently, convexo-concaved nonwoven fabric 1' is subjected to the pleating work. In the pleating work, by the use of a pair of heating cylinders 103a and 103b, with which rubber nip rollers 102a and 102b are kept in press-contact, heating and pressing effects are applied to convexo-concaved nonwoven fabric 1' so as to collapse convexo-concaves of convexo-concaved nonwoven fabric 1' by pressure. Namely, convexo-concaved nonwoven fabric 1' is pinched by and pressed between nip roller 102a and heating cylinder 103a, between both heating cylinders 103a and 103b, and heating cylinder 103b and nip roller 102b, so that convexo-concaves thereof are collapsed by pressure, and during this collapsing operation, it is kept in tight contact with the circumferential surface of heating cylinders 103a and 103b so as to be subjected to heat treatment. Hereby, convexo-concaved nonwoven fabric 1' is formed with many pleats in transverse direction, and extensibility in longitudinal direction is given thereto to become extensible nonwoven fabric 11.

When a nonwoven fabric is subjected to the pleating work, the formed pleats might sometime gradually disappear due to the restoring force of the nonwoven fabric. In that case, it becomes difficult to manufacture a composite sheet having stable elasticity. Thus, by heat treating the nonwoven fabric under pleated condition with the apparatus shown in Fig. 2, the pleats given to the nonwoven fabric may be kept stable.

At this stage, the nonwoven fabric should preferably be subjected to heat treatment at a temperature equal to or more than the softening point of the fibers constituting the nonwoven fabric. The softening point of the fibers will change depending on how degree the molecular orientation of the fibers is advanced during the process of forming a nonwoven fabric from the fibers and also depending on the thermal history to which the fibers are subjected during the formation of the nonwoven fabric. For example, polyester has a softening point in the temperature range from 100°C through 250 °C; and polypropylene has a softening point in the temperature range from 100°C through 160°C. Therefore, within these temperature ranges, an optimum temperature is selected depending on the advancement of the molecular orientation and the thermal history. Further, in the case of polymers having hydrophilic group such as polyamides, polyvinyl alcohols, and celluloses polymers, it might be advantageous that the heat treatment is applied under moistened and heated condition in which moisture is suspended.

Extensible nonwoven fabric 11 thus acquired is horizontally conveyed by a conveyor (not illustrated). During the horizontal conveyance of extensible nonwoven fabric 11, thermoplastic elastomer in melted condition is extruded from each of a number of monofilament dies 104 arranged above extensible nonwoven fabric 11, and the extruded thermoplastic elastomer reaches extensible nonwoven fabric 11 before it solidifies. Monofilament dies 104 are transversely arranged at a pitch of 5 mm, and extrusion of the thermoplastic elastomer from monofilament dies 104 thus arranged permits formation of a number of strands 12 including the thermoplastic elastomer on extensible nonwoven fabric 11 so that strands 12 may be aligned longitudinally of that extensible nonwoven fabric 11.

When strands 12 are formed on extensible nonwoven fabric 11, before solidifying of such strands 12, extensible nonwoven fabric 11 is nipped by a pair of nip rollers 105a and 105b so as to be cooled. Thus, strands 12 and extensible nonwoven fabric 11 are integrated into one body, and elastic composite sheet 10 is resultantly acquired.

Although it is well known to form the thermoplastic elastomer into a strand-shape by using nozzles, in the present embodiment, formation of the thermoplastic elastomer into the strand-shape is combined with the extensibility giving work of the nonwoven fabric, and further during the forming process of strands, the strands before solidifying are urged to reach the nonwoven fabric, and are solidified on the nonwoven fabric so as to be attached to or bonded with the nonwoven fabric to thereby produce a composite sheet having elasticity in a longitudinal direction. Although the thermoplastic elastomer is inferior in its capability of being spun, it is rather easy to carry out spinning of relatively thick strands by employing the above-described simple apparatus, and hereby elastic composite sheets may be simply and safely manufactured at a high speed and at a good productivity. Further, since the strands are aligned in a longitudinal direction in which the elastic composite sheet of the present embodiment makes an elastic motion, the strands can exhibit a longitudinal elastic characteristic with a small amount of elastomer.

In the present embodiment, an elastic composite sheet to which extensibility in a longitudinal direction is given, is formed by employing the apparatus using gear rollers 101a and 101b, as shown in Fig. 2. Hereunder, another means for forming an elastic composite sheet to which extensibility in a longitudinal direction is given will be described.

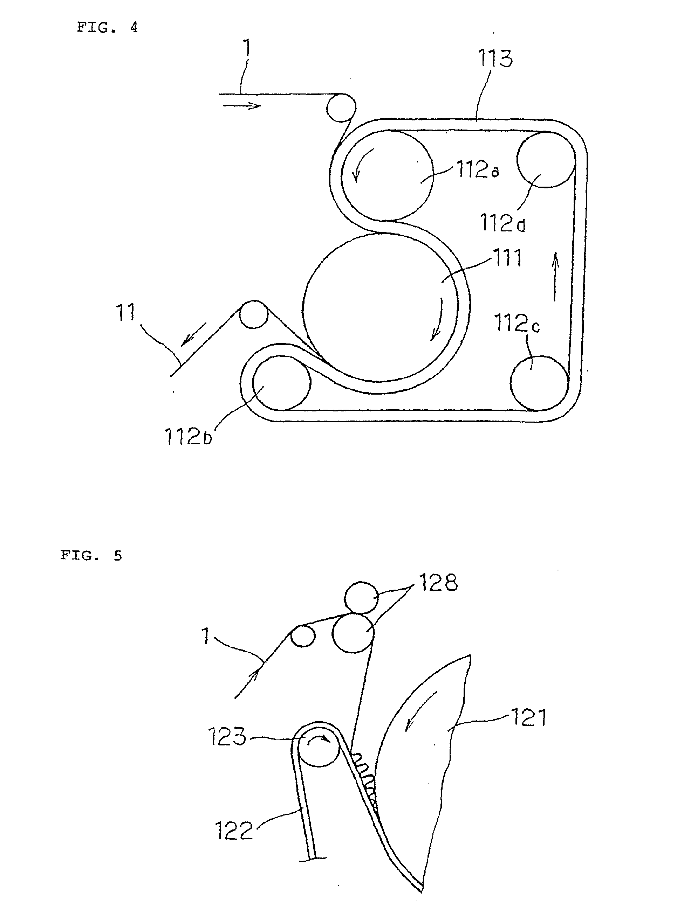

The apparatus illustrated in Fig. 4 is provided with endless rubber belt 113, four turn rollers 112a, 112b, 112c, and 112d around which the endless rubber belt 113 is wound, and heating cylinder 111 pressed against the outer face of rubber belt 113 between two turn rollers 112a and 112b. Rubber belt 113 is extended on the circumferential surface of turn roller 112a arranged on upstream side of heating cylinder 111 with respect to the running direction thereof.

Raw nonwoven fabric 1 is supplied while being kept in tight contact with the extended rubber belt 113, and is accommodated in heating cylinder 111, in pursuant to the running of rubber belt 113. Since rubber belt 113 is extended on turn roller 112a, when rubber belt 113 moves apart from turn roller 112a to be transferred onto heating cylinder 111, rubber belt 113 will shrink in its running direction, i.e., in a longitudinal direction. Hereby, raw nonwoven fabric 1 in tight contact with the extended rubber belt 113 also shrinks in the longitudinal direction on heating cylinder 111. This longitudinal shrinkage and heat treatment by heat transmitted from heating cylinder 111 permit acquirement of an extensible nonwoven fabric 10 which is given extensibility in the longitudinal direction.

The apparatus illustrated in Fig. 5 is provided with heating cylinder 121 rotating in a direction indicated by an arrow and circulating sheet 122 running along the circumferential surface of heating cylinder 121, being guided by turn roller 123. Raw nonwoven fabric 1 is nipped by nip rollers 128, and is fed into a gap between heating cylinder 121 and circulating sheet 122. The running speed of circulating sheet 122 is smaller than a feeding speed of raw nonwoven fabric 1 given by nip rollers 128. Thus, in the gap in which raw nonwoven fabric 1 is fed, raw nonwoven fabric 1 is folded, and with such folded condition, raw nonwoven fabric 1 is pinched by heating cylinder 121 and circulating sheet 122. The pinched raw nonwoven fabric 1 is subjected to heat treatment by heat transmitted from heating cylinder 121 to thereby permit acquirement of a extensible nonwoven fabric which is given extensibility in the longitudinal direction.

### (Second Embodiment)

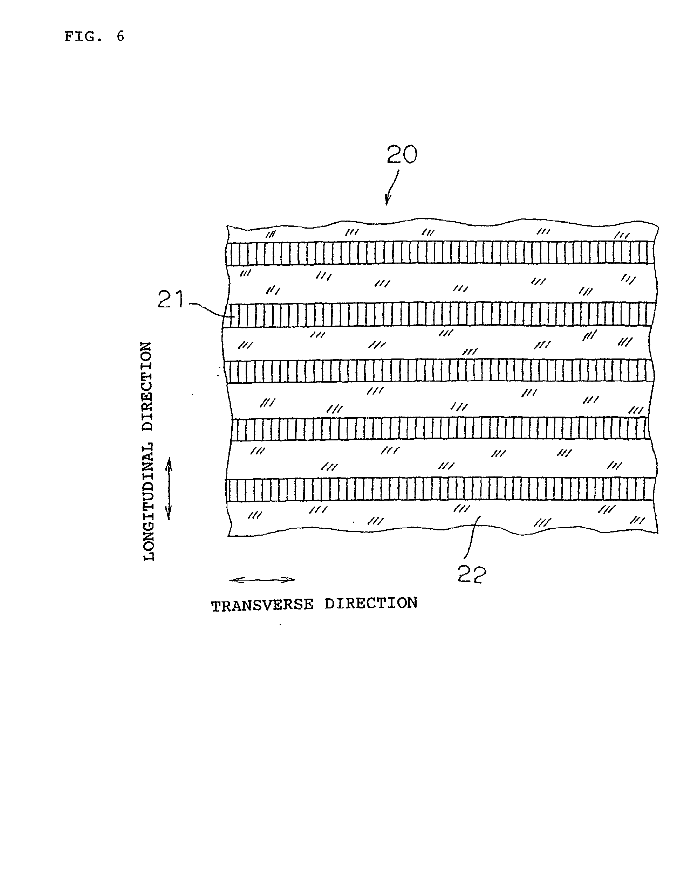

Elastic composite sheet 20 shown in Fig. 6 is constituted by bonding a plurality of strands 22 of thermoplastic onto one face of a extensible nonwoven fabric 21 having elongation of equal to or more than 100% in a transverse direction. Extensible nonwoven fabric 21 is acquired by applying an extensibility giving work to a raw nonwoven fabric including non-elastic fibers in a transverse direction, and hereby it is extensible in the transverse direction at elongation of equal to or larger than 100%. Strands 22 are aligned in a transverse direction corresponding to the extending direction of extensible nonwoven fabric 21 while being mutually spaced apart in the longitudinal direction of extensible nonwoven fabric 21.

The kind of raw nonwoven fabric, material of non-elastic fibers constituting the nonwoven fabric, the kind of work for giving extensibility, the range of elongation of extensible nonwoven fabric obtained by the result of extensibility giving work, and the material of thermoplastic elastomer constituting strands 22 are identical with those of the first embodiment, and therefore, any description thereof will be omitted here.

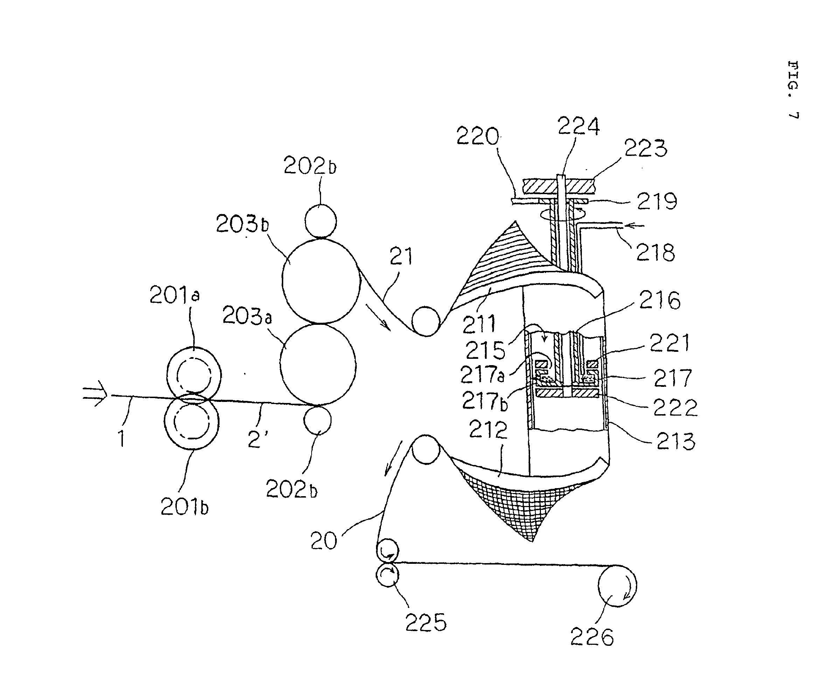

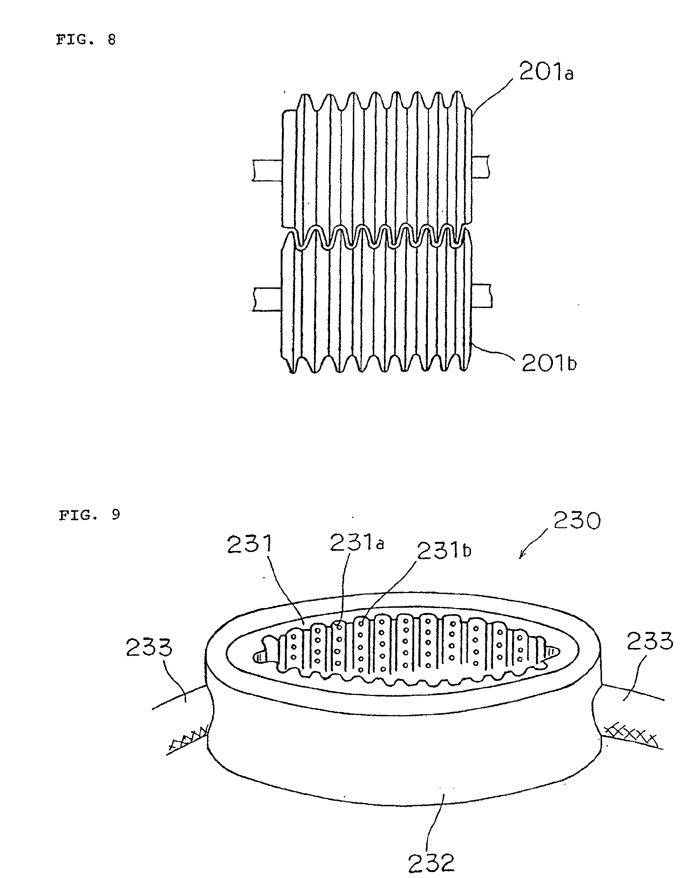

Next, an embodiment of a manufacturing method of the composite sheet according to the present embodiment will be described with reference to Figs. 7 and 8.

In Fig. 7, raw nonwoven fabric 1 firstly passes through between a pair of gear rollers 201a and 201b. As illustrated in Fig. 8, gear rollers 201a and 201b are provided with a number of convexo-concave alternately arranged in a direction parallel with the rotating axis of respective gear rollers 201a and 201b, and formed in the entire circumferential surface of gear rollers 201a and 201b. The convexo-concaves of respective gear rollers 201a and 201b are also arranged to be mutually engaged. When raw nonwoven fabric 1 passes between these gear rollers 201a and 201b, raw nonwoven fabric 1 is formed with convexo-concaves copied from the convexo-concaves of gear rollers 201a and 201b to become convexo-concaved nonwoven fabric 2'. In the present embodiment, the pitch and the height of the convexo-concaves of gear rollers 201a and 201b are set so that the convexo-concaves of the obtained convexo-concaved nonwoven fabric 2' have the cycle of approximately 1 mm, and the depth of approximately 1 mm.

Convexo-concaved nonwoven fabric 2' is subsequently subjected to the pleating work. The pleating work is conducted in such a manner that a pair of heating cylinders 203a and 203b against which rubber nip rollers 202a and 202b are pressed, respectively, heat and pressurize convexo-concaved nonwoven fabric 2' so as to collapse convexo-concaves of convexo-concaved nonwoven fabric 2' by pressure. Namely, convexo-concaved nonwoven fabric 2' is pinched by and pressed between nip roller 202a and heating cylinder 203a, between both heating cylinders 203a and 203b, and between heating cylinder 203b and nip roller 202b, so that convexo-concaves thereof are collapsed by pressure, and during this collapsing operation, it is kept in tight contact with the circumferential surface of heating cylinders 203a and 203b so as to be subjected to heat treatment. Temperature for the heat treatment is selected to be equal to or higher than a softening point of fibers constituting the nonwoven fabric. Hereby, convexo-concaved nonwoven fabric 2' is stably formed with a number of pleating in a longitudinal direction so that the extensibility in the transverse direction is given, and thus extensible nonwoven fabric 21 is acquired.

Extensible nonwoven fabric 21 thus acquired is conveyed toward an elastomer spinning mechanism for spinning thermoplastic elastomer to extensible nonwoven fabric 21 in a strand-shape.

As illustrated in Fig. 7, the elastomer spinning mechanism is provided with a forming unit 211 for forming extensible nonwoven fabric 21 in a cylindrical shape, elastomer spinning unit 215 for spinning thermoplastic elastomer to the inner face of extensible nonwoven fabric 21 formed in the cylindrical shape by forming unit 211, and developing unit 212 for developing the cylindrically-shaped extensible nonwoven fabric 21 spun with the thermoplastic elastomer, into a planar shape fabric.

Forming unit 211 continuously forms planar-shape extensible nonwoven fabric 21 into a cylindrical shape, i.e., it is a unit having a function to execute the forming. The forming system of this kind is generally used in a forming machine for flexible package, and the system is often referred to as a sailor former or merely a former since the outer shape thereof resembles the collar of a sailor suit.

Developing unit 212 is practically a unit installed by inverting forming unit 211 upside down, and therefore when extensible nonwoven fabric 21 passes through developing unit 212 along a passage reverse to that permitting the fabric to pass through forming unit 211, the cylindrically formed extensible nonwoven fabric 21 is developed into a planar shape fabric. Developing unit 212 may be any type of unit if it has a developing function. For example, it may be possible to utilize a developing system employing a triangular frame generally used for developing a cylindrical film obtained by inflation film forming.

Forming unit 211 and developing unit 212 are disposed to be vertically spaced apart, and guide cylinder 213 is arranged between forming unit 211 and developing unit 212 for guiding the cylindrically formed extensible nonwoven fabric 21. Thus, extensible nonwoven fabric 21 having passed through forming unit 211 is guided by an inner wall face of this guide cylinder 213.

Elastomer spinning unit 215 has a spinning head 217 arranged to be rotatable about a substantially vertical axis. Spinning head 217 is integrally provided at a lower end of a rotating shaft 216 rotatably journaled about an outer circumference of support shaft 224 to be coaxial with such support shaft 224, which is secured to frame 22 of this apparatus. Spinning head 217 is disposed inside guide cylinder 213.

At the uppermost end of rotating shaft 216, there is provided a pulley 219. A rotation is transmitted to pulley 219 from a non-illustrated rotation drive source via belt 220, so that rotating shaft 216 is rotated about support shaft 224. In this embodiment, although a pulley-drive system is employed for the ease of disassembling and cleaning of spinning head 217, if support shaft 224 were directly connected to the rotation drive source, a simpler drive construction will be provided.

Spinning head 217 is a hollow cylindrical member having an annular opening 217a at an upper end face thereof and closed at its lower end face. The outer circumferential wall of spinning head 217 is provided with nozzle 217b communicating between the inner hollow portion of spinning head 217 and the exterior thereof. In this embodiment, although it is shown that spinning head 217 has a cylinder construction, spinning head 217 may be provided with any construction capable of spinning elastomer by the use of centrifugal force, and therefore it may be constructed in a member of a propeller shape of an airplane, or a hollow-shape with a cross-section of a triangle, a rectangle, or a cross, and rotating about a center of gravity to spin the elastomer from the outer circumferential surface of the member. Further, the spinning head might be formed in a member of a polygonal columnar shape. However, generation of turbulence of air around the spinning head during the rotation thereof will spoil the stability of spinning condition, and accordingly the employment of a cylindrical shape is preferable.

Further, although it is shown that spinning head 217 is constructed to have, at its upper end, opening 217a, if dispersion of the melt elastomer into the atmosphere is not desirable, it may be formed in a tightly closed construction. In that case, it may be considered that support shaft 224 will be formed in a double shaft construction having inner and outer tubes between which melt elastomer will be furnished to the spinning head, and rotational drive will be achieved by a transmitting shaft disposed inside the inner tube. The number of nozzle 217a formed may be plural in response to the later-described pitch of alignment of strands of the elastomer.

Above spinning head 217, there is disposed supply pipe 218 having an end (a lower end) exposed to the interior of the upper end opening 217a. Supply pipe 218 is connected to extruder or gear pump (not shown), and the elastomer is fed to spinning head 217 through this supply pipe 218 in the melt state or as thick dope. Spinning head 217 is provided with heaters 221 and 222, respectively, arranged at its upper and lower portions thereof, and when spinning head 217 is heated by these heaters 221 and 222, the temperature of the elastomer within spinning head 217 is kept at a temperature suitable for being spun from nozzle 217b.

The operation of this elastomer spinning system will now be described. As described above, sheet-like extensible nonwoven fabric 21 is formed into a cylindrical shape by forming unit 211, and is conveyed downward along the inner wall face of guide cylinder 213. In other words, extensible unwoven fabric 21 having formed into a cylindrical shape is moved along the axis of guide cylinder 223 in the interior of such guide cylinder 223.

At this time, spinning head 217 is rotated while thermoplastic elastomer in melt condition is being fed from supply pipe 218 into spinning head 217, so that the supplied thermoplastic elastomer fed in to spinning head 217 is centrifugally spun. As a result, the spun thermoplastic elastomer attaches to the inner circumferential face of extensible nonwoven fabric 21 before it solidifies, and then solidifies on extensible nonwoven fabric 21 to thereby be bonded with extensible nonwoven fabric 21.

Thus, spinning of the thermoplastic elastomer by the use of the centrifugal force due to the rotation of spinning head 217 permits the thermoplastic elastomer to attach to the inner circumferential face of extensible nonwoven fabric 21 along the circumferential direction of guide cylinder 213. Also, during this process, since extensible nonwoven fabric 21 is conveyed downward, the thermoplastic elastomer is spirally bonded with the inner circumferential face of extensible nonwoven fabric 21.

Thereafter, extensible nonwoven fabric 21 passes through developing unit 212 to be developed into a sheet-shape, so as to become elastic composite sheet consisting of extensible nonwoven fabric 21 and the thermoplastic elastomer. Through appropriate setting of the feeding speed of extensible nonwoven fabric 21 and the rotating speed of spinning head 217, the thermoplastic elastomer is aligned in strands in a direction approximately perpendicular to the width direction of extensible nonwoven fabric 21, so that elastic composite sheet 20 capable of being greatly elastic in the width direction can be acquired.

Since the thermoplastic elastomer is continuously spun to extensible nonwoven fabric 21, it is necessary to vertically sever extensible nonwoven fabric 21 for the purpose of developing the cylindrical-shape extensible nonwoven fabric 21. Therefore, in order to sever extensible nonwoven fabric 21 to which the thermoplastic elastomer has been spun, a cutter (not shown) for severing extensible nonwoven fabric 21 in a direction corresponding to the feeding direction of extensible nonwoven fabric 21 is provided between spinning head 217 and developing unit 212. Extensible nonwoven fabric 21, which is severed by the cutter, is developed into a planar shape by developing unit 212.

Elastic composite sheet 20 having been developed while it passes through developing unit 212 is wounded onto winding roller 226 via paired rollers 226.

Thus, by forming extensible nonwoven fabric 21 into a cylindrical shape, and spinning thermoplastic elastomer on the inner circumferential face thereof from rotating spinning head 217 to make it bond to extensible nonwoven fabric 21, the thermoplastic elastomer is able to simply and rapidly form strands. Further, the strands of thermoplastic elastomer are aligned in a transverse direction corresponding to a direction in which elastic composite sheet 20 is elastic, and therefore regardless of a small amount of elastomer, transverse elastic property can be effectively exhibited. Furthermore, since this elastic composite sheet 20 is constituted by bonding extensible nonwoven fabric 21 with thermoplastic elastomer, even if basis weight of extensible nonwoven fabric 21 is small, the elastic property thereof is not worsened, and accordingly a required amount of extensible nonwoven fabric 21 may also be reduced.

In the embodiment illustrated in Fig. 7, there is shown a case where extensible nonwoven fabric 21 having passed through forming unit 211 is immediately fed into guide cylinder 213. When a web is formed into a cylindrical shape, there is often provided a device for thermally sealing opposite ends of the web between forming unit 211 and guide cylinder 213. However, in the present embodiment, forming of nonwoven fabric into a cylindrical shape is not an aim, and therefore such sealing device is not necessary.

In the present embodiment, the width of extensible nonwoven fabric 21 and the inner circumferential length of guide cylinder 213 should ideally correspond to one another. Nevertheless, in practical, due to either an irregularity of the end of extensible nonwoven fabric 21 or meandering of extensible nonwoven fabric 21, it is very difficult to achieve complete correspondence of both. Therefore, it is desirable to make the width of extensible nonwoven fabric 21 larger than the length of the inner circumferential face of guide cylinder 213. This is because if the width of extensible nonwoven fabric 21 is insufficient, there appears a gap between opposite ends of extensible nonwoven fabric 21 left inside guide cylinder 213. In the portion of the gap, thermoplastic elastomer will be directly spun against guide cylinder 213 to be fixedly secured to the portion thereof. Thus, the portion to which thermoplastic elastomer is fixedly secured and a portion of extensible nonwoven fabric 21 to which thermoplastic elastomer is spun will pull against each other, and accordingly feeding of extensible nonwoven fabric 21 will be prevented.

Further, as the property of elastomer, the spun elastomer after attaching to extensible nonwoven fabric 21 will be released from a extend by a tensile force that is exhibited by the centrifugal force, and as a result, such spun elastomer has an action to shrink extensible nonwoven fabric 21 in the direction of the strands. Therefore, even if the width of extensible nonwoven fabric 21 and the inner circumferential length of guide cylinder 213 are brought into correspondence to one another, the above-mentioned shrinking action causes reduction in the width of extensible nonwoven fabric 21 in the lower portion of guide cylinder 213, to thereby generate a gap between extensible nonwoven fabric 21 and guide cylinder 213. For the above-described reason, it is practical to make the width of extensible nonwoven fabric 21 larger than the inner circumferential length of guide cylinder 213.

When elastic composite sheet 20 is developed, it is possible to use a plurality of cutters for severing the fabric into a plurality of composite sheets. In this case, developing unit 212 may be replaced by a simpler mechanism, for example, a plurality of set of turn rollers. This is advantageous in that the mechanism can be quite simplified, so long as there is no problem in that the width of the acquired respective composite sheets will narrow. On the other hand, the cylindrical extensible nonwoven fabric spun with the thermoplastic elastomer may be flattened as it stands, so that an elastic composite sheet having a constitution that strands of thermoplastic elastomer are sandwiched by extensible nonwoven fabric may be acquired. In this latter case, developing unit 212 of the apparatus shown in Fig. 7 will not be necessary.

In the present embodiment, by the use of gear rollers 201a and 201b illustrated in Fig. 7, an extensible nonwoven fabric provided with extensibility in a transverse direction is formed. A description of the other means for forming an extensible nonwoven fabric provided with extensibility in a transverse direction will be provided hereunder.

The apparatus illustrated in Fig. 9 is extensibility giving work apparatus 230, which gives extensibility in a transverse direction to a raw nonwoven fabric preliminarily formed in a cylindrical shape by forming convexo-concaves in the fabric in a longitudinal direction. Extensibility giving work apparatus 230 is provided with a cylinder 231 through which a cylindrically formed raw nonwoven fabric passes, and vacuum chamber 232 disposed on the outside of this cylinder 231.

Cylinder 231 is formed, in its inner circumferential face, with a number of grooves 231a extending along the axis of cylinder 231. Respective grooves 231a are formed with a plurality of apertures 231b arranged along grooves 231a and communicated with vacuum chamber 232. Vacuum chamber 232 is connected to a vacuum blower (not shown) via hose 233. By the drive of the vacuum blower, the pressure prevailing in vacuum chamber 232 is brought into a negative pressure, and the air is sucked into vacuum chamber 232 via apertures 231b.

When the preliminarily cylindrically formed raw nonwoven fabric is guided into the interior of cylinder 231, the raw nonwoven fabric is brought into tight contact with the inner circumferential face of cylinder 231, due to the suction of the air through apertures 231b. Since the inner circumferential face of cylinder 231 has grooves 231a formed therein, the raw nonwoven fabric is formed with convexo-concaves copied from the shape of grooves 231a pursuant to the movement of the raw nonwoven fabric along the axis of cylinder 231. Hereby, the raw nonwoven fabric becomes an extensible nonwoven fabric to which extensibility in transverse direction is given. In this connection, cylinder 231 should desirably be heated to a temperature equal to or more than the softening point of the thermoplastic elastomer constituting the raw nonwoven fabric. Then, the raw nonwoven fabric formed with convexo-concaves can be subjected to heat treatment, so that the convexo-concaves formed in the raw nonwoven fabric may be made stable.

This extensibility giving work apparatus 230 can be combined with the elastomer spinning device illustrated in Fig. 7. When the elastomer spinning device illustrated in Fig. 7 and extensibility giving work apparatus 230 illustrated in Fig. 9 are combined together, instead of extensible nonwoven fabric 22, raw nonwoven fabric 1 is fed to the forming unit illustrated in Fig. 7.

As a concrete constitution of the combination of extensibility giving work apparatus 230 and the elastomer spinning device, extensibility giving work apparatus 230 may be disposed between forming unit 211 and guide cylinder 213 or replace guide cylinder 213.

In the case that extensibility giving work apparatus 230 is disposed between forming unit 211 and guide cylinder 213, thermoplastic elastomer will be spun toward extensible nonwoven fabric formed by passing through extensibility giving work apparatus 230.

On the other hand, in the case that extensibility giving work apparatus 230 replaces guide cylinder 213, the extensibility giving work apparatus 230 is arranged so that the axial length thereof is equivalent to the length of the guide cylinder, and thermoplastic elastomer is spun toward nonwoven fabric within cylinder 231. Hereby, both formation of an extensible nonwoven fabric and bonding of the strands of thermoplastic elastomer with the extensible nonwoven fabric may be simultaneously achieved.

### (Third Embodiment)

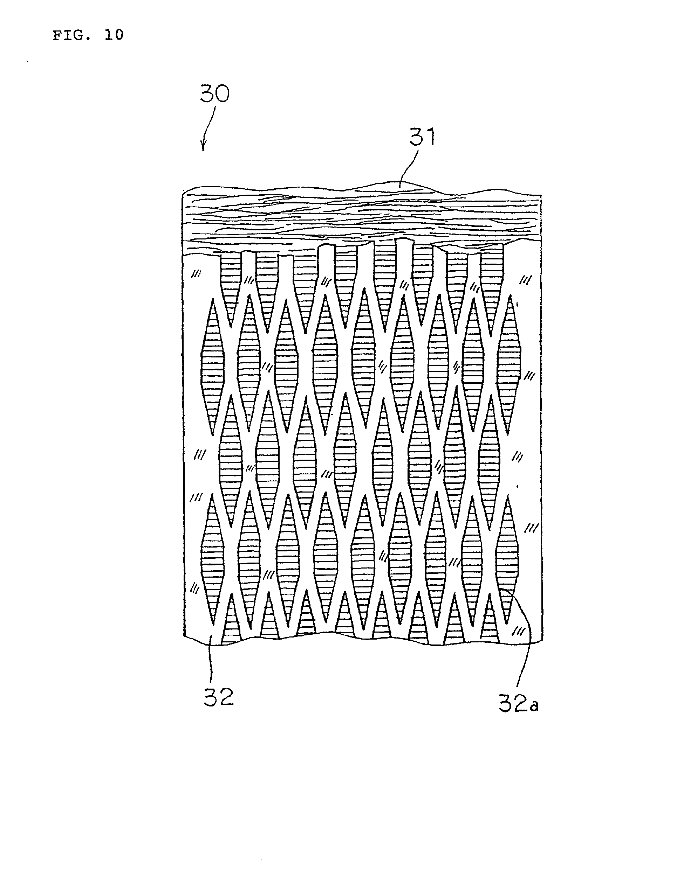

Elastic composite sheet 30 illustrated in Fig. 10 is an embodiment of one requested to be elastic in a longitudinal direction, and is provided with such a constitution that reticulated film 22, which is a web made of thermoplastic elastomer, is bonded to one face of extensible nonwoven fabric 31 having elongation of equal to or more than 100% in the longitudinal direction. Reticulated film 22 is formed with a number of openings 22a lengthened in a longitudinal direction corresponding to a direction in which extensible nonwoven fabric 21 has elongation of equal to or more than 100%. Extensible nonwoven fabric 31 is substantially similar to that described in the first embodiment, and accordingly any specified description thereof is omitted here.

A detailed description of reticulated film 22 will be provided hereinafter. Reticulated film 22 is produced by fabricating a raw film including thermoplastic elastomer. An ordinary film manufactured, for example, by the T-die method or by cutting and spreading a tubular film may be used as the raw film. The thermoplastic elastomer that is a raw material of the raw film may be the elastomer similar to that used in the first embodiment.

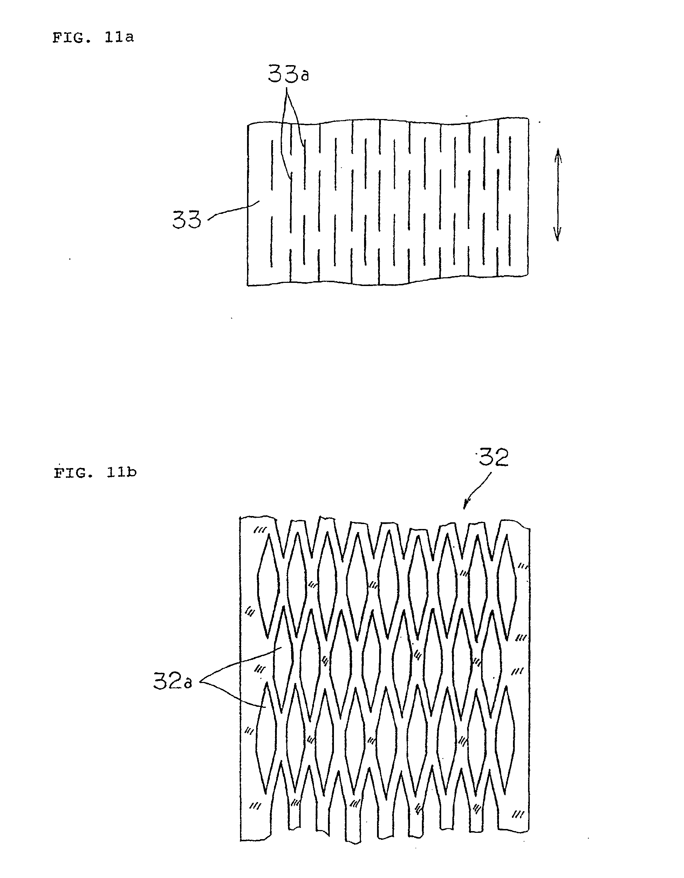

In the present embodiment, in order to form openings 32a as shown in Fig. 10, a number of slits 33a which are long in a longitudinal direction (the direction of an arrow in Fig. 11a) are formed in raw film 33 including thermoplastic elastomer, in a staggered manner as illustrated in Fig. 11a. Subsequently, raw film 33 formed with slits 33a is extended in a longitudinal direction. Such extending of raw film 33 in the longitudinal direction causes shrinkage of raw film 33 in a transverse direction while extension of silts 33a in the longitudinal direction, and as a result, slits 33a are formed in openings 32a as illustrated in Fig. 11b.

Then, raw film 33 having been extended in the longitudinal direction is, under a condition as it is, heated at a temperature equal to or higher than the starting point of flow of the thermoplastic elastomer that constituting raw film 33. This heating of raw film 33 under its extended condition is continued until a restitutive force of raw film 33 disappears. Then, even if a given tensile force applied to raw film 33 is removed, raw film 33 maintains its shape illustrated in Fig. 11b, so that reticulated film 32 may be acquired. The heating temperature of raw film 33 should preferably be kept at a temperature equal to or higher than 10°C through 20°C of the flow-starting temperature for the purpose of shortening the heating time, and more preferably be kept at a temperature equal to or higher than 30°C through 50°C of the flow-starting temperature.

The flow-starting temperature corresponds to a glass-transition temperature in the case where the hardened segment of thermoplastic elastomer is non-crystalline polymer, and the flow of the thermoplastic elastomer commences at a temperature equal to or higher than that temperature. When the hardened segment is crystalline, the flow-starting temperature corresponds to the temperature of fusion of the crystal, and the flow of the thermoplastic elastomer commences at a temperature equal to or higher than that temperature of fusion. The glass-transition temperature and the temperature of fusion of the thermoplastic elastomer are measured by DSC (Differential Scanning Calorimeter) according to JIS K 7121. Besides, The glass-transition temperature or the temperature of fusion is generally lower when measurement is conducted with the thermoplastic elastomer than when polymer element of the hardened segment is measured.

The width of reticulate film 32 becomes smaller than that of raw film 33 finally, and therefore the width of raw film 33 is determined by taking into consideration a required width of reticulated film 32 and the extending magnification of raw film 33.

When thus acquired reticulated film 32 is bonded to extensible nonwoven fabric 31, elastic composite sheet 30 illustrated in Fig. 10 may be manufactured. At the time of bonding of both, since reticulated film 32 includes thermoplastic elastomer, merely heating reticulated film 32 under a condition such that reticulated film 32 and extensible nonwoven fabric 31 are superposed upon each other, can easily bond reticulated film 32 to extensible nonwoven fabric 31. Accordingly, reticulated film 32 and extensible nonwoven fabric 31 can be simply and cheaply bonded together without usage of any adhesive.

During the bonding process of extensible nonwoven fabric 31 and reticulated film 32, the film before heating (raw film 33 formed with slits 33a, as shown in Fig. 11a) might be extended and superposed on extensible nonwoven fabric 31, and might subsequently be heated under such superposed condition, so that disappearance of the restitutive force of the film as well as the bonding of the film and extensible nonwoven fabric 31 may simultaneously be achieved.

As described above, in the present embodiment, the web including thermoplastic elastomer is extended, and is heated, as it is, so as to cause disappearance of the restitutive force of the film and bonding to the extensible nonwoven fabric. Thus, the extending of the web permits the openings of the web to be extended thereby enhancing air permeability thereof and an efficiency of utilization of thermoplastic elastomer in the extending direction of the web. As a result, an effective extending property can be obtained at a small amount of elastomer. The extending magnification of the web is usually twice, and should preferably be thrice or more.

Further, the web is made thinner by extending it, and consequently the feeling of the web is improved while causing an increase in its flexibility, so that the elastic composite sheet may be more adapted for use in production of a disposable diaper and clothes. Since the web is extended, it is understood that a raw web may be made thicker by an amount of extending magnification. Accordingly, by this method of extending a web, even thermoplastic elastomer, which is usually difficult to be fabricated in a thin raw web having a uniform thickness, might be used for simply forming a web having a uniform thickness.

In the present embodiment, although an embodiment of an elastic composite sheet having elasticity in the longitudinal direction has been described, when an elastic composite sheet is needed to be elastic in a transverse direction, such elastic composite sheet may be acquired by bonding a reticulated film having openings elongated in a transverse direction with a extensible nonwoven fabric similar to that of the second embodiment. This reticulated film can be formed in such a manner that a raw film formed with slits in a transverse direction is extended in the transverse direction, and under this condition, the raw film is then heated at a temperature equal to or higher than the flow-starting temperature of the thermoplastic elastomer so that disappearance of the restitutive force may be caused. When a web is extended in a transverse direction, the width after being extended is broadened, so that a raw fabric of a small width may be formed in a product having a large width, and therefore such extending method is suitable for accomplishing forming of a thermoplastic elastomer, which is inferior in its formability.

A direction in which a web is extended is determined in response to a direction in which an elastic composite sheet aims to have elasticity. Namely, when an elastic composite sheet aims to have elasticity in a longitudinal direction, a web should be extended in the longitudinal direction, and when an elastic composite sheet aims to have elasticity in a transverse direction, a web should be extended in the transverse direction.

As described above, a web is extended in one direction. Nevertheless, even if a web is extended in two directions, so long as the extending magnifications in respective extending directions are different from one another, and so long as a balance between the longitudinal and transverse directions is lost, it should be understood that such extending in the two directions would be included in the extending in one direction as defined by the present invention.

As an extending means, a conventional stretching means for a film and a nonwoven fabric may be employed. For example, when stretching in a longitudinal direction should be made, a roller stretching apparatus is generally used, and when stretching in a transverse direction should be made, a tenter stretching apparatus or a pulley stretching apparatus are suitable, and more specifically, a stretching apparatus as disclosed in Japanese Publication of Examined Application No. 36948/91 of the present Applicant et al. may here be cited.

Although the stretching and heating of a web are separately conducted in the above-describe example, these might be conducted simultaneously so that the web is extended while it is being heated. However, since extending of the thermoplastic elastomer occurs uniformly when it is extended at room temperature or at a given low temperature while being heated, it is preferable to conduct the stretching process and the heating process separately.

Bonding a extensible nonwoven fabric with a web will be most simply achieved by either a heat-pressing method using heat rollers or a heat-emboss bonding method. Further, if the use of the elastic composite sheet requires, bonding by adhesive such as hot-melt adhesive, ultrasonic bonding, or high-frequency bonding might be employed. Furthermore, a physical bonding method such as a needle punch and a water jetting may be employed.

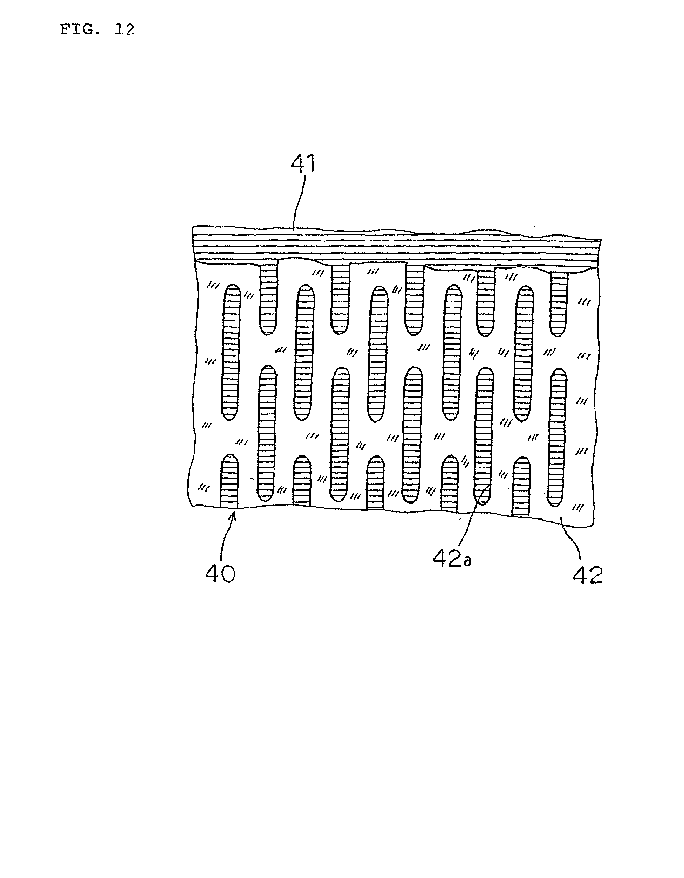

The web including thermoplastic elastomer might not necessarily be extended if it were able to satisfy the performances that the elastic composite sheet requires. For example, elastic composite sheet 40 illustrated in Fig. 12 is constituted by bonding film 42 including a thermoplastic elastomer with an extensible nonwoven fabric 41 to which extensibility in a longitudinal direction is given. Openings 42 are formed in film 42 during the film-forming stage, and film 42 under melt condition is bonded with extensible nonwoven fabric 41.

The Web, which is bonded with extensible nonwoven fabric, might be a nonwoven fabric or a net other than the above-mentioned film so far as it were made of thermoplastic elastomer, and might further be either a knitted web or woven fabric of thermoplastic elastomer yarns.

For example, when nonwoven fabric is used as the web, thermoplastic elastomer is spun to obtain fibers in a nonwoven fabric form, and then the thermoplastic elastomer nonwoven fabric is bonded with a extensible nonwoven fabric to manufacture an elastic composite sheet in a manner such that the alignment direction of the elastomer fibers coincides with an elastic direction aimed by the elastic composite sheet. A method of manufacturing a nonwoven fabric of thermoplastic elastomer may be a conventional melt blown method, a conventional spunbonded method, or a spinning method as disclosed in Japanese publications of unexamined application Nos. 242960/90 and 204767/98 of the Present Applicant et al., though not limited to these methods.

With an elastic composite sheet made by bonding of a extensible nonwoven fabric with a thermoplastic elastomer nonwoven fabric, since the thermoplastic elastomer nonwoven fabric per se has flexibility due to the fact that the thermoplastic elastomer is formed in fibers, the elastic composite sheet can consequently be of highly flexible and of high quality. Also, the thermoplastic elastomer nonwoven fabric has air permeability, and therefore when it is used for producing a disposable diaper and clothes, the products can be very comfortable without generating any frowsy condition.

It is required that the thermoplastic elastomer web has air permeability and moisture permeability. The air permeability and so on are necessary for preventing generation of any frowsy condition when the elastic composite sheet is used for clothes and the like. Nevertheless, in the case of thermoplastic elastomer web acquired by extending a raw web, holes provided for the air permeability purpose and so on might be minute since during the stretching, the holes are expanded.

In the foregoing, the elastic composite sheet according to the present invention was described with respect to three embodiments thereof. However, the elastic composite sheet according to the present invention can exhibit elasticity even if elongation of at least equal to or more than 100%, preferably of equal to or more than 150%, and most preferably of equal to or more than 200% is given. Further, it is preferable that any residual strain in the elastic composite sheet after repetition of elastic motion is small. More specifically, the residual strain after three times repetition of elastic motion of 200% elongation, should preferably be at least equal to or less than 25%, more preferably be equal to or less than 15%, and most preferably be equal to or less than 10%.

The elastic composite sheet according to the present invention may be adapted for various fields in clothes and medical care, including an elastic bandage, a supporter, a cloth's cuff, an elastic tape, a stretch belt, a strap of brassieres, a belly band, a maternity band, a fray stopper for a pair of gloves or socks, elastic and resilient elements for sanitary materials such as a disposable diaper and an incontinence pad.

In accordance with the present invention, an elastic composite sheet capable of effectively exhibiting elasticity with the use of a small amount of elastomer can be manufactured by a simple and effective forming method. Thus, the elastic composite sheet according to the present invention is excellent in its capability of mass production.

Hereinafter, a more specific description of several embodiments of the present invention will be provided.

### (Example 1)

Pleats were formed in a commercially available polypropylene nonwoven fabric (basis weight is 30 g/m²) in a longitudinal direction at a pitch of 0.8 mm by the employment of the apparatus illustrated in Fig. 2, and the fabric is subsequently subjected to heat treatment at 130°C to form a extensible nonwoven fabric with basis weight of 65 g/m² and having extensibility given thereto in a longitudinal direction.

During the conveying process of this extensible nonwoven fabric, as thermoplastic elastomer, SEBS (styrene-ethylenebutylene-styrene) polymer (the trade name of "Craton G 1657 " manufactured by Shell Japan Inc.) was extruded from a number of monofilament dies arranged at a pitch of 5mm so as to form strands of thermoplastic elastomer on the extensible nonwoven fabric. Then, before solidification of the thermoplastic elastomer, the extensible nonwoven fabric was nipped by nip rollers while cooling the thermoplastic elastomer, so that the stretchable nonwoven fabric and the thermoplastic fabric are bonded together. As a result, an elastic composite sheet capable of being elastic in a longitudinal direction was acquired. The fineness of the strands was 500 tex.

The acquired elastic composite sheet had elongation of 230% in a longitudinal direction, and even after repeating elastic motion of 200% 5 times, the integrity of the extensible nonwoven fabric and the strands was not damaged, and residual strain was 19%.

### (Example 2)

Short fibers that is a mixture of 75% of Polyethylene terephthalate short fibers (fineness is 0.25 tex, and length is 50 mm) and 25% of polyesters low-melting short fibers (Trade name "MELTY 2080 " manufactured by Unitika, Ltd.) was employed as a raw material, and was supplied to a carding machine used for spinning. Thus, a carded web with basis weight of 40 g/m² was acquired. Then, this web was subjected to thermal embossing treatment at a temperature 180 °C to obtain a short-fiber nonwoven fabric.

An elastic nonwoven fabric having elasticity in a transverse direction was acquired by using this short-fiber nonwoven fabric, and by the employment of the apparatus shown in Fig. 7. Namely, the short-fiber nonwoven fabric was formed therein with pleats at a pitch of 0.8 mm in a transverse direction, and subsequently was subjected to heat treatment at the temperature of 120 °C to form an extensible nonwoven fabric having extensibility given thereto in a transverse direction. This extensible nonwoven fabric was then supplied to an elastomer spinning system while permitting the extensible nonwoven fabric to run along the guide cylinder, so that melt thermoplastic elastomer is spun thereto from the spinning head. Thus, the strands of thermoplastic elastomer were formed in the extensible nonwoven fabric, and an elastic composite sheet capable of being elastic in a transverse direction was acquired. As the thermoplastic elastomer, SEBS (styrene-ethylenebutylene-styrene) polymer (the trade name of "Craton G 1657 " manufactured by Shell Japan Inc.) was employed. The spinning head having an outer diameter of 200 mm, and two nozzles was used, and was rotated at 150 rpm to spin the thermoplastic elastomer. The guide cylinder that was used had an inner diameter of 500 mm. The fineness of the strands was 300 tex.

The acquired elastic composite sheet has elongation of 300% in a transverse direction, and even after repeating the elastic motion of 200% 5 times; the integrity of the extensible nonwoven fabric and the strands was not damaged, and residual strain was 15%.

## Claims

1. An elastic composite sheet comprising:
an extensible nonwoven fabric including non-elastic fibers, and subjected to a extensibility giving work to thereby have elongation of equal to or more than 100% in at least one direction; and,
a thermoplastic elastomer layer having a pattern with a directional property in a direction in which said extensible nonwoven fabric has said elongation of equal to or more than 100%, and bonded to said extensible nonwoven fabric.

2. The elastic composite sheet according to claim 1, wherein said thermoplastic elastomer layer comprises a plurality of strands including thermoplastic elastomer, aligned in parallel to the direction in which said extensible nonwoven fabric has said elongation of equal to or more than 100%.

3. The elastic composite sheet according to claim 1, wherein said thermoplastic elastomer layer comprises a web including thermoplastic elastomer.

4. The elastic composite sheet according to claim 3, wherein said web is a film formed with openings elongated in the direction in which said extensible nonwoven fabric has said elongation of equal to or more than 100%.

5. The elastic composite sheet according to claim 3, wherein said web is a nonwoven fabric in which fibers are aligned in parallel to the direction in which said extensible nonwoven fabric has said elongation of equal to or more than 100%.

6. The elastic composite sheet according to claim 3, wherein said web is a web having lost a restitutive force by being held at a temperature equal to or higher than a flow-starting temperature of said thermoplastic elastomer under a extended state in the direction in which said extensible nonwoven fabric has the elongation of equal to or larger than 100%.

7. A method of manufacturing an elastic composite sheet comprising the steps of:
forming a extensible nonwoven fabric having elongation of equal to or larger than 100% in at least one direction by subjecting a raw nonwoven fabric including non-elastic fibers to extensibility giving work; and,
bonding a layer of thermoplastic elastomer to said extensible nonwoven fabric in a pattern having a directional property in the direction in which said extensible nonwoven fabric has said elongation of equal to or larger than 100%.

8. The method of manufacturing an elastic composite sheet according to claim 7, wherein said forming step of said extensible nonwoven fabric comprises the step of applying said extensibility giving work to said raw nonwoven fabric so that said extensible nonwoven fabric has elongation of at least equal to or larger than 100% in a longitudinal direction, and said bonding step of said thermoplastic elastomer layer comprises the steps of attaching plasticized thermoplastic elastomer to said extensible nonwoven fabric moving in a longitudinal direction in a strand-like manner.

9. The method of manufacturing an elastic composite sheet according to claim 7, wherein said forming step of said extensible nonwoven fabric comprises the step of applying said extensibility giving work to said raw nonwoven fabric so that said extensible nonwoven fabric has elongation of at least equal to or larger than 100% in a transverse direction, and said bonding step of said thermoplastic elastomer layer comprises the steps of moving said extensible nonwoven fabric formed in a cylindrical shape, in an axial direction of said cylindrical shape, and attaching, by using a member for spinning plasticized thermoplastic elastomer during rotation thereof about an axis of said cylindrical shape, said plasticized thermoplastic elastomer to an inner face of said extensible nonwoven fabric moving in said axial direction by the use of a centrifugal force due to the rotation of said member, in a strand-like manner along a circumferential direction of said cylindrical shape.

10. The method of manufacturing an elastic composite sheet according to claim 7, wherein said extensibility giving work comprises a pleating work.

11. The method of manufacturing an elastic composite sheet according to claim 10, wherein said pleating work comprises heat treatment step for making pleats formed in said raw nonwoven fabric stable.

12. The method of manufacturing an elastic composite sheet according to claim 9, wherein said extensibility giving work comprises a convexo-concave applying work for forming, by the use of a cylinder formed therein with a plurality of axial grooves, convexo-concaves in said raw nonwoven fabric by bringing said raw nonwoven fabric into tight contact with an inner circumferential face of said cylinder while moving said raw nonwoven fabric formed in said cylindrical shape along a direction of the axis of said cylinder inside said cylinder.

13. The method of manufacturing an elastic composite sheet according to claim 12, further comprising a heat treatment step for making said convexo-concaves formed in said nonwoven fabric stable after said convexo-concave apply work.

14. The method of manufacturing an elastic composite sheet according to claim 12, wherein said forming step of said extensible nonwoven fabric and said bonding step of said thermoplastic elastomer layer are simultaneously executed.

15. The method of manufacturing an elastic composite sheet according to claim 7, wherein said thermoplastic elastomer layer comprises a web including thermoplastic elastomer having said pattern.

16. The method of manufacturing an elastic composite sheet according to claim 15, wherein said bonding step of said thermoplastic elastomer layer comprises the steps of extending said web in the direction in which said extensible nonwoven fabric has said elongation of equal to or larger than 100%, and causing disappearance of a restitutive force of said web by maintaining said extended web at a temperature equal to or higher than a flow-starting temperature of said thermoplastic elastomer.

17. The method of manufacturing an elastic composite sheet according to claim 15, wherein said bonding step of said thermoplastic elastomer layer comprises the steps of forming a plurality of openings elongated in the direction in which said extensible nonwoven fabric has said elongation of equal to or larger than 100%, in a film including thermoplastic elastomer, and bonding said film formed with said openings to said extensible nonwoven fabric.

18. The method of manufacturing an elastic composite sheet according to claim 17, wherein said step of forming the plurality of openings in said film comprises the steps of forming a plurality of slits elongated in a direction in which said extensible nonwoven fabric has said elongation of equal to or larger than 100%, in a film including thermoplastic elastomer, extending said film formed with said slits in a longitudinal direction of said slits, and causing disappearance of a restitutive force of said film by maintaining said extended film at a temperature equal to or higher than a flow-starting temperature of said thermoplastic elastomer.
